# EUROPEAN PATENT APPLICATION

(11) **EP 4 450 831 A1**
(43) Date of publication of application: **23.10.2024**
(21) Application number: 22906992.7
(22) Date of filing: 14.10.2022
(51) Int. Cl.: F15B 15/10, B25J 15/12

(54) **GRIPPING DEVICE**

(30) Priority: 17.12.2021 JP 2021205501
(71) Applicant: BRIDGESTONE CORPORATION, Chuo-ku Tokyo 104-8340 (JP)
(72) Inventor: MIYOSHI, Satona, Chuo-ku, Tokyo (JP); FUJITA, Shungo, Chuo-ku, Tokyo (JP); OONO, Shingo, Chuo-ku, Tokyo (JP)
(74) Representative: Marks & Clerk LLP
(86) International application number: PCT/JP2022/038430
(87) International publication number: WO 2023/112457

(57) **Abstract**

When each of the fluid pressure actuators 10 contracts, the fluid pressure actuator 10 of the grasping device 1 is provided so that a tip portion of one of the fluid pressure actuators 10 approaches a tip portion of other fluid pressure actuators 10, and a soft member 30 is provided in a space on a proximal end portion side of the fluid pressure actuator 10 surrounded by the plurality of the fluid pressure actuators 10.

## Description

### [Technical Field]

The present disclosure relates to a grasping device using a fluid pressure actuator that curves (curls) during contraction.

### [Background Art]

Conventionally, a structure (so-called McKibben type) having a rubber tube that expands and contracts by air pressure and a sleeve that covers the outer peripheral surface of the tube has been widely used as a fluid pressure actuator that expands and contracts the tube using gas or liquid.

Such a McKibben type fluid pressure actuator also has a known structure that curves (curls) during contraction (see Patent Literature 1). Specifically, Patent Literature 1 discloses a grasping device for grasping an object (which may be called a workpiece) by using a plurality of such fluid pressure actuators.

### [Citation List]

### [Patent Literature]

[Patent Literature 1]
Japanese Patent Laid-Open No. 2021-088999

### [Summary of Invention]

However, the above-described grasping device using a fluid pressure actuator has the following problems. Specifically, depending on the shape, size, etc. of the object, such as when the object is spherical or amorphous, the curled fluid pressure actuator may not be able to grasp the object well.

Accordingly, the following disclosure is made in view of such a situation, and it is an object of the present invention to provide a grasping device capable of more reliably grasping an object while using a fluid pressure actuator that curves (curls) during contraction.

An embodiment of the present disclosure is a grasping device (For example, grasping device 1) using a plurality of fluid pressure actuators (fluid pressure actuators 10) that are curved during contraction. The fluid pressure actuators are a flexible soft actuator, and the fluid pressure actuators are provided such that when each of the fluid pressure actuators contract, a tip portion (tip portion 300) of one of the fluid pressure actuators approaches a tip portion of other fluid pressure actuators. A soft member (soft member 30) is provided in a space on a proximal end portion (proximal end portion 200) side of the fluid pressure actuator surrounded by the plurality of the fluid pressure actuators.

### [Brief Description of Drawings]

[FIG. 1] FIG. 1 is a perspective view of a grasping device 1 in operation.
[FIG. 2] FIG. 2 (a) and 2 (b) are a standalone perspective view and an exploded perspective view of the grasping device 1.
[FIG. 3] FIG. 3 is a side view of a fluid pressure actuator 10.
[FIG. 4] FIG. 4 is a cross-sectional view of an actuator body portion 100 along a radial direction D_{R}.
[FIG. 5] FIG. 5 is an explanatory view of the behavior of the fluid pressure actuator 10.
[FIG. 6] FIGS. 6 (a) and 6 (b) are an example of operation of the grasping device 1.
[FIG. 7] FIG. 7 is a perspective view of the grasping device 1A.
[FIG. 8] FIG. 8 (a) , 8 (b) and 8 (c) are a side view and a bottom view of the grasping device 1B related to modified example.

### [Description of Embodiments]

Hereinafter, the embodiment will be described based on the drawings. The same functions and structures are denoted by the same or similar reference numerals, and the description thereof will be omitted accordingly.

### (1) Overall schematic configuration of the grasping device

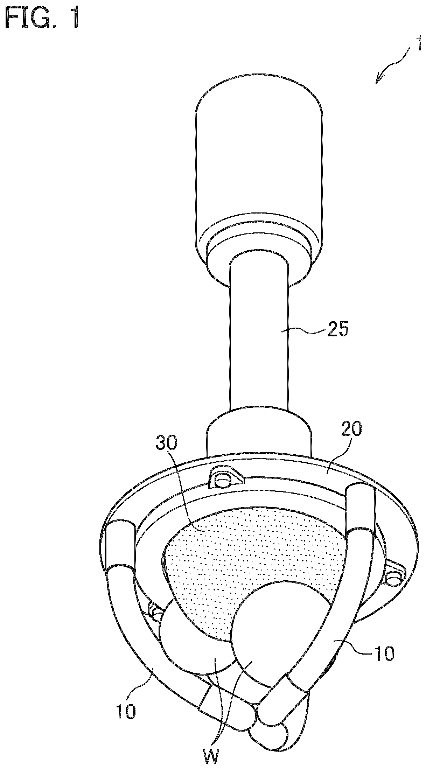

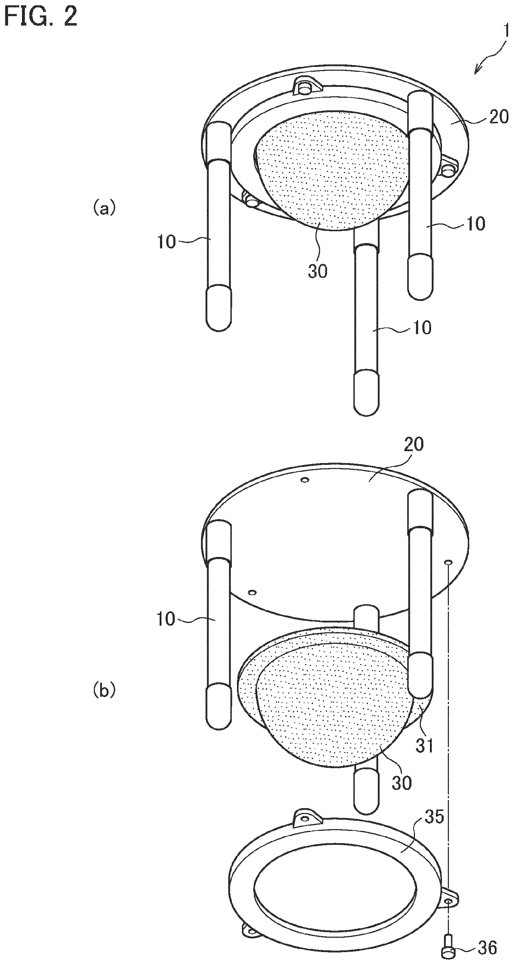

FIG. 1 is a perspective view of the grasping device 1 in operation according to the present embodiment. FIGS. 2 (a) and 2 (b) are a standalone perspective view and an exploded perspective view of the grasping device 1.

The grasping device 1 uses a plurality of fluid pressure actuators 10 that curve (curl) during contraction. The grasping device 1 can grasp an object W (which may be called a workpiece) using a plurality of fluid pressure actuators 10. The grasping device 1 may be used as a robot hand or the like. The fluid pressure actuator 10 is a flexible soft actuator that can be curved.

The grasping device 1 includes the fluid pressure actuator 10, a base portion 20, and a support portion 25. The base portion 20 is supported by the support portion 25 extending in the vertical direction.

A plurality of fluid pressure actuators 10 are attached to the base portion 20. In the present embodiment, the base portion 20 is disk-shaped, and three fluid pressure actuators 10 are provided at approximately equal intervals on the same circumference of the base portion 20.

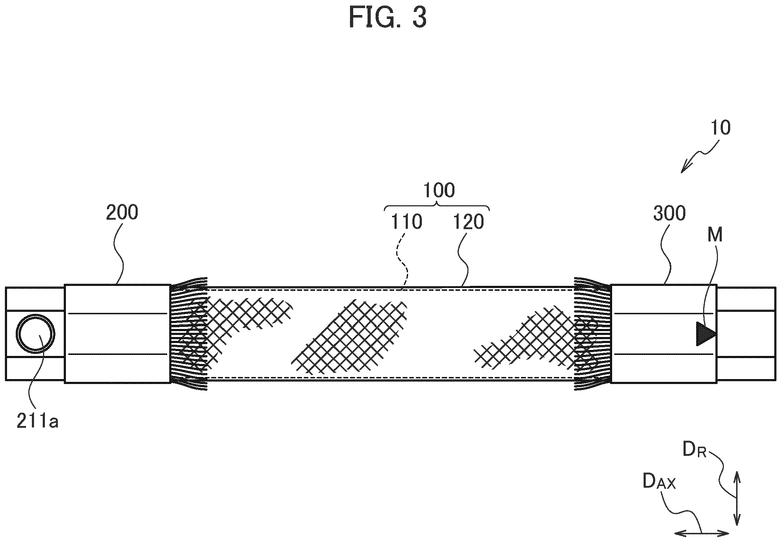

The fluid pressure actuators 10 are provided so that when each of the fluid pressure actuators 10 contracts, a tip portion 300 (Not shown in FIGS 1 and 2, see FIG 3) of the fluid pressure actuator 10 approaches the tip portion 300 of the other fluid pressure actuators 10. That is, the fluid pressure actuators 10 are provided so as to be curved toward the center side of the grasping device 1, specifically, the base portion 20.

A soft member 30 is attached to the base portion 20. Specifically, the hemispherical soft member 30 has a ring-shaped flange portion 31. The flange portion 31 is held by a holding ring 35 and fixed to the base portion 20 using a screw 36.

The soft member 30 is provided in a space on the side of a proximal end portion 200 (see FIG. 3) of the fluid pressure actuator 10 surrounded by the plurality of fluid pressure actuators 10. Preferably, the soft member 30 is at least partially spherical. In other words, the soft member 30 may not necessarily be spherical, but may be cubic or the like.

Preferably, the soft member 30 is flexible enough to deform so as not to apply a large pressure to the object W when the object W is grasped by the fluid pressure actuator 10. The soft member 30 can be formed using a material such as rubber or urethane, for example. The soft member 30 may be sponge-like. The soft member 30 has a buffering property when the object W is grasped, and may be called a buffering member.

The object W is not particularly limited, but it is relatively round in shape, has a certain size even though it is irregular, and can be easily spilled from a space surrounded by a plurality of fluid pressure actuators 10, for example, round vegetables, fruits, etc.

### (2) Schematic configuration of the fluid pressure actuator

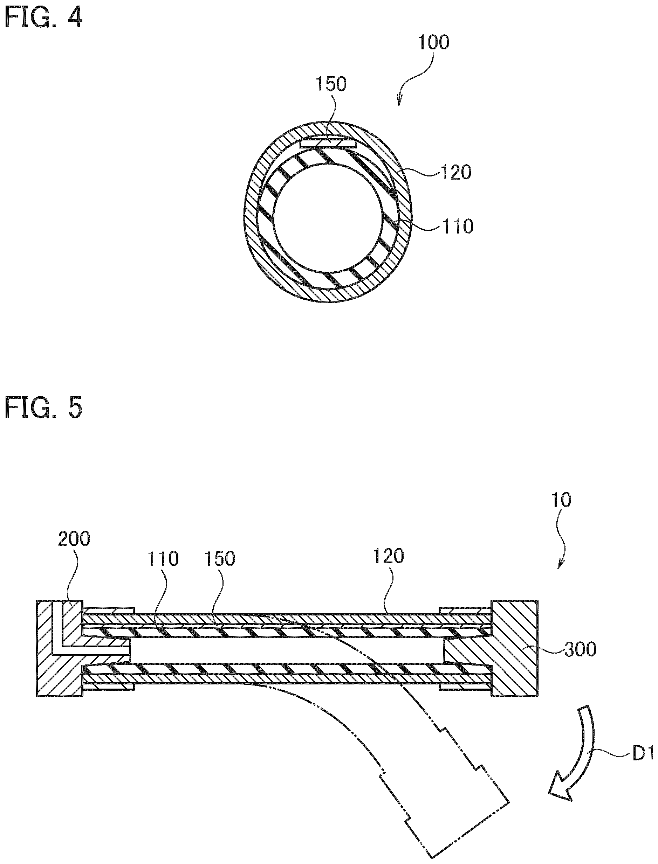

FIG. 3 is a side view of the fluid pressure actuator 10 according to the present embodiment. FIG. 4 is a cross-sectional view of the actuator body portion 100 along the radial direction D_{R}.

The fluid pressure actuator 10 has the actuator body portion 100, the proximal end portion 200, and the tip portion 300.

The actuator body portion 100 is composed of a tube 110 and a sleeve 120. Fluid flows into the actuator body portion 100 through a connection port 211a.

As a basic characteristic, the actuator body portion 100 contracts in the axial direction D_{AX} of the actuator body portion 100 and expands in the radial direction D_{R} due to fluid flow into the tube 110. The actuator body portion 100 expands in the axial direction D_{AX} of the actuator body portion 100 and contracts in the radial direction D_{R} due to fluid flow out of the tube 110. Due to the shape change of the actuator body portion 100, the fluid pressure actuator 10 functions as an actuator.

In the present embodiment, while using a McKibben type fluid pressure actuator having such basic characteristics, by providing a (may be referred to as regulating or restricting) restricting member 150 (Not shown in FIG. 3, see FIGS. 4, 5, etc.) that restricts compression of the axial direction D_{AX}, it can be curved (curled) in an orthogonal direction orthogonal to the axial direction D_{AX}, that is, in the radial direction D_{R}.

The fluid used to drive the fluid pressure actuator 10 may be either a gas such as air or a liquid such as water or mineral oil, but in particular, the fluid pressure actuator 10 may have high durability that can withstand hydraulic drive with high pressure applied to the actuator body portion 100.

The connection port 211a is attached to a drive pressure source for the fluid pressure actuator 10, specifically a hose (pipeline) connected to a gas or liquid compressor. The fluid that flows through the connection port 211a flows through the passage hole (not shown) into the actuator body portion 100, specifically into the tube 110.

The tube 110 is a cylindrical body that expands and contracts under fluid pressure. The tube 110 is made of an elastic material such as butyl rubber to repeatedly contract and expand under fluid pressure. When the fluid pressure actuator 10 is hydraulically driven, it is preferable that it be at least one type selected from the group consisting of NBR (nitrile rubber), chloroprene rubber, and epichlorohydrin rubber having high oil resistance.

The sleeve 120 is cylindrical and covers the outer peripheral surface of the tube 110. The sleeve 120 is a stretchable structure in which fiber cords oriented in a predetermined direction are woven, and a rhombic shape is repeated by crossing the oriented cords. By having such a shape, the sleeve 120 deforms pantographically and follows the tube 110 while restricting its contraction and expansion.

As a cord constituting the sleeve 120, a fiber cord of an aromatic polyamide (aramid fiber) or polyethylene terephthalate (PET) is preferably used. However, it is not limited to this kind of fiber cord, but may be a cord of a high-strength fiber such as a PBO fiber (polyparaphenylene benzobisoxazole), for example.

In this embodiment, the restricting member 150 is provided between the tube 110 and the sleeve 120.

The restricting member 150 is not compressed in the axial direction D_{AX}, and can be deformed only along the radial direction D_{R} (which may be called the deflection direction). That is, the restricting member 150 resists compression along the axial direction D_{AX} and is deformable in an orthogonal direction (radial direction D_{R}) orthogonal to the axial direction D_{AX}.

In other words, the restricting member 150 has a characteristic that is difficult to deform along the axial direction D_{AX} and deflects along the radial direction D_{R}. Deformable may be alternatively referred to as curving or curling.

The restricting member 150 also has a function of restricting (restraining) the expansion of the tube 110 (and the sleeve 120) to the radial direction D_{R} outside at a position on the outer periphery of the tube 110 where the restricting member 150 is provided.

In this embodiment, the restricting member 150 is provided from one end side to the other end side of the axial direction D_{AX} in the space of inside of the sleeve 120, specifically, the radial inside of the sleeve 120. In this embodiment, the restricting member 150 is formed by using a leaf spring.

The size of the leaf spring may be selected according to the size of the fluid pressure actuator 10, the required generating force, etc., and is not particularly limited. The material of the leaf spring is also not particularly limited, but typically it may be a material that is easy to curve and resistant to compression, such as a metal such as stainless steel. For example, the restricting member 150 may be formed of a thin sheet of carbon fiber reinforced plastic (CFRP) or the like. Since the CFRP is less likely to undergo plastic deformation than a metal, it is easy for the fluid pressure actuator 10 to return to its original straight state after curving.

The proximal end portion 200 is located on the base portion 20 side. The connection port 211a described above is formed on the proximal end portion 200. The proximal end portion 200 may include a mechanism for sealing one end portion of the axial direction D_{AX} of the actuator body portion 100.

The tip portion 300 is located on the opposite side of the proximal end portion 200 on the base portion 20 side. The tip portion 300 may be provided with a mechanism for sealing the other end portion of the axial direction D_{AX} of the actuator body portion 100.

The sealing mechanism of the actuator body portion 100 provided in the proximal end portion 200 and the tip portion 300 may be similar to, for example, the fluid pressure actuator disclosed in Japanese Patent Laid-Open Publication No. 2021-088999.

### (3) Behavior of the fluid pressure actuator 10

FIG. 5 is an explanatory view of the behavior of the fluid pressure actuator 10. The fluid pressure actuator 10 shown in FIG. 5 is fixed to the proximal end portion 200 side, and the tip portion 300 side is freely movable. That is, the proximal end portion 200 side is a fixed end, and the tip portion 300 side is a free end.

As described above, when the fluid flows into the fluid pressure actuator 10, it attempts to contract in the axial direction D_{AX}, but since the restricting member 150 is provided, the contraction along the axial direction D_{AX} is restricted (constrained).

That is, the restricting member 150 formed by a rigid member such as a leaf spring serves as a backbone, and expands in the radial direction D_{R} outside on the opposite side (lower side in FIG. 5) to the position on the outer periphery of the tube 110 and sleeve 120 where the restricting member 150 is provided, thereby shortening the dimension of the fluid pressure actuator 10 in the axial direction D_{AX} and deflecting the fluid pressure actuator 10 (Specifically, the actuator body portion 100) along the direction D1. Note that the direction D1 may be called a flexible direction. In order to make it easy to recognize that the fluid pressure actuator 10 is bent in the direction D1, a mark M (see FIG. 3) may be provided to indicate the position where the restricting member 150 is provided.

The restricting member 150 is provided between the rubber made tube 110 and the sleeve 120, resists compression in the axial direction D_{AX}, is deformable along the orthogonal direction (radial direction D_{R}) orthogonal to, and is arranged in a part in the circumferential direction of the actuator body portion 100.

That is, when the actuator body portion 100 (McKibben) attempts to contract along the axial direction D_{AX} due to the inflow (pressurization) of fluid into the actuator body portion 100, the portion of the restricting member 150 has high compressive rigidity, and therefore, the portion where the restricting member 150 is arranged cannot contract. On the other hand, since the portion of the other actuator body portion 100 attempts to contract, a force in the curving direction along the orthogonal direction (radial direction D_{R}) is generated, and the portion is curved with the restricting member 150 as the back face.

### (4) Operation of the grasping device 1

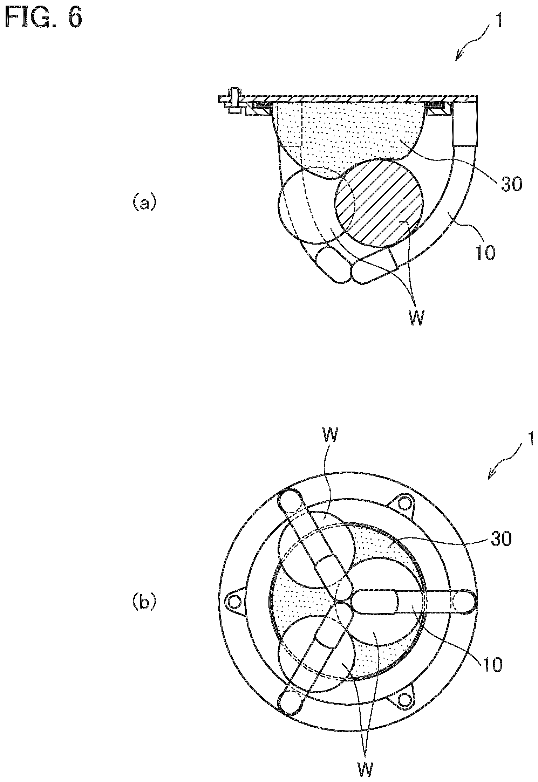

FIGS. 6 (a) and 6 (b) show an example of operation of the grasping device 1. Specifically, FIGS. 6 (a) and 6 (b) show a side view and a bottom view of the grasping device 1 holding the object W.

As shown in FIGS. 6 (a) and 6 (b), the grasping device 1 simultaneously holds a plurality of spherical objects W by using a plurality of fluid pressure actuators 10.

When the fluid pressure actuator 10 curves and grasps the object W, the object W comes into contact with the spherical soft member 30, and when the object W moves by the grasping force of the fluid pressure actuator 10, the soft member 30 deforms.

In this case, it is desirable that the soft member 30 has a softness (flexibility) that can firmly support the object W without damaging the object W (For example, vegetables or fruits).

### (5) Modified example

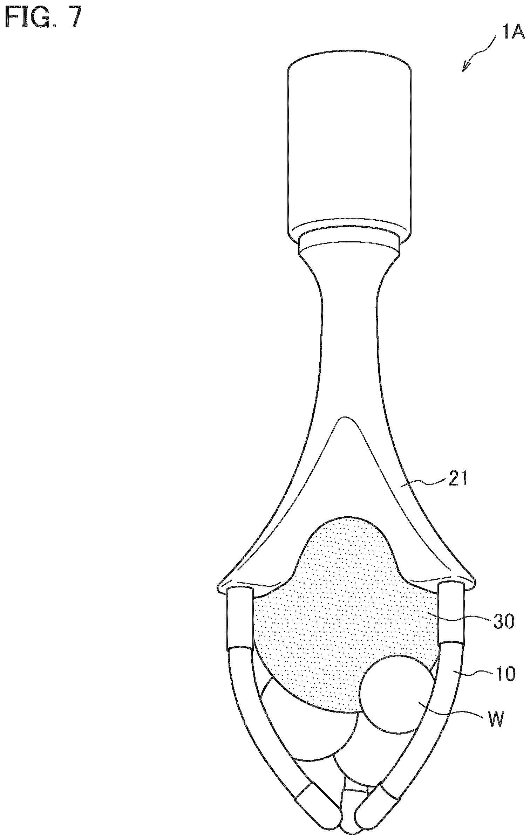

Next, modified example of the grasping device 1 will be described. FIG. 7 is a perspective view of the grasping device 1A related to modified example. Compared with the grasping device 1, the grasping device 1A includes a base to which the fluid pressure actuator 10 is attached and a support base portion 21 in which a support for the base is integrated, instead of the disc-shaped base portion 20.

The support base portion 21 is formed in a three-dimensional shape compared with the base portion 20, and has a shape capable of holding the spherical soft member 30 in a three-dimensional shape. In such a grasping device 1A, the base and the support supporting the base can be integrated, and the soft member 30 can also be held in a three-dimensional shape by the support base portion 21, thereby reducing the number of components.

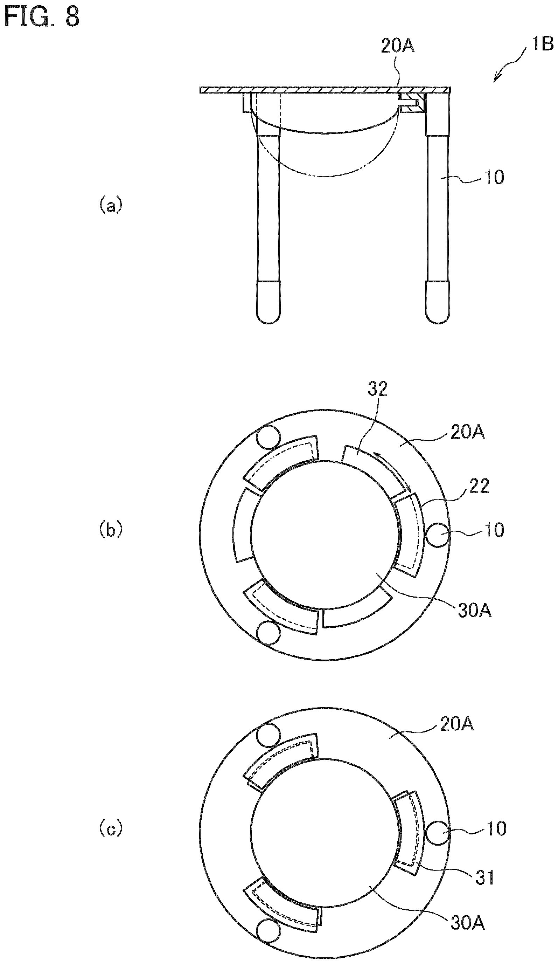

FIGS. 8 (a), 8 (b) and 8 (c) are side views and bottom views of the grasping device 1B related to modified example. In the grasping device 1B, a contractable and expandable bag-like body is used as a soft member. Specifically, a contractable and expandable airbag 30 A is used by taking in and out a gas such as air. A hose (not shown) for gas supply may be connected to the hemispherical airbag 30 A.

The airbag 30 A has a flange portion 32. The base portion 20 A is provided with a holding portion 22 corresponding to the flange portion 32. The holding portion 22 can detachably hold the flange portion 32.

More specifically, in the base portion 20 A, the holding portions 22 are provided at 3 locations on the same circumference as the outer circumference of the airbag 30 A to be locked with the flange portions 32 provided at 3 locations on the outer circumference of the airbag 30 A. By rotating the airbag 30 A along the circumferential direction (see FIGS. 8 (b) and 8 (c)), the flange portion 32 is caught by the holding unit 22, and the airbag 30 A is held.

In the grasping device 1B, the flange portion 32 of the airbag 30 A is detachably held, but the flange portion 31 of the soft member 30 (rubber or urethane, etc.) of the grasping device 1 may be detachably held by the same shape.

### (6) Function and Effects

According to the above-described embodiment, the following function and effects can be obtained. Specifically, in the above-described grasping device, at least a part of a spherical soft member is provided in a space on the proximal end portion 200 side of the fluid pressure actuator 10 surrounded by the plurality of fluid pressure actuators 10. Therefore, even when the shape, size, etc. of the object are different, such as when the object is spherical or amorphous, the soft member can push the object back to the fluid pressure actuator 10 side at an appropriate pressure.

Thus, the curled fluid pressure actuator 10 can grasp the object well and stably. That is, according to the grasping device described above, the object can be grasped more securely while using the fluid pressure actuator that curves (curls) during contraction.

Further, the soft member may be a contractable and expandable bag-like body such as the airbag 30 A. If such the airbag 30 A is adopted, more kinds of objects can be accommodated.

Further, the soft member may have a flange portion, which may be detachably held by a grasping device. By adopting such a configuration, it is easy to replace the soft member with a soft member having different flexibility or size, and can accommodate more types of objects.

### (7) Other embodiments

Although the embodiments have been described above, they are not limited to the description of the embodiments, and it is obvious to those skilled in the art that various modifications and improvements can be made.

For example, in the embodiments described above, the soft member is hemispherical, but may not necessarily be hemispherical. Specifically, the soft member may be ellipsoidal as long as it is rounded without corners.

In the above-described embodiment, the flexibility of the fluid pressure actuator is ensured using the restricting member 150, but the flexibility of the fluid pressure actuator may be ensured by another structure. For example, by providing a flexible frame material having a part of a bellows shape around the fluid pressure actuator, when the fluid pressure actuator contracts, the fluid pressure actuator is curved such that the bellows portion faces toward an inside.

Although the present disclosure has been described in detail, it is clear to those skilled in the art that the present disclosure is not limited to the embodiments described herein. The present disclosure may be implemented in a modified and modified manner without departing from the object and scope of the present disclosure as determined by the description of the scope of claims. Accordingly, the description of the present disclosure is for illustrative purposes and does not have any restrictive meaning to the present disclosure.

### [Reference Signs List]

1, 1A, 1B Grasping devices
10 Fluid pressure actuator
20, 20 A Base portions
21 Support base portion
22 Holding portion
25 Support portion
30 Soft Member
30 A Airbag
31, 32 Flange portions
35 Holding ring
36 Biss
100 Actuator body portion
110 Tube
120 Sleeve
150 Restricting member
200 Proximal end portion
211a Connection port
300 Tip portion
W Object

## Claims

1. A grasping device using a plurality of fluid pressure actuators that are curved during contraction, wherein
the fluid pressure actuators are a flexible soft actuator,
the fluid pressure actuators are provided such that when each of the fluid pressure actuators contract, a tip portion of one of the fluid pressure actuators approaches a tip portion of other fluid pressure actuators, and
a soft member is provided in a space on a proximal end portion side of the fluid pressure actuator surrounded by the plurality of the fluid pressure actuators.

2. The grasping device according to claim 1, wherein the soft member is at least partially spherical.

3. The grasping device according to claim 1 or 2, wherein
the fluid pressure actuators comprise:
a tube that is cylindrical, and expands and contracts under fluid pressure; and
a sleeve having a stretchable structure in which fiber cords oriented in a predetermined direction are woven and that covers an outer peripheral surface of the tube.

4. The grasping device according to any one of claims 1 to 3, wherein the soft member is a contractable and expandable bag-like body.

5. The grasping device according to any one of claims 1 to 4, wherein
the soft member has a flange portion, and
the grasping device comprises a holding portion for detachably holding the flange portion.

6. The grasping device according to claim 3, wherein the fluid pressure actuators comprise a restricting member provided inside in the sleeve from one end to another end in the axial direction of the tube.
